# FASCICULE DE BREVET EUROPEEN

(11) **EP 2 651 575 B1**
(45) Date de publication et mention de la délivrance du brevet: **24.06.2015**
(21) Numéro de dépôt: 11815449.1
(22) Date de dépôt: 14.12.2011
(51) Int. Cl.: B09B 1/00, C22B 3/04, C02F 1/62, B09C 1/02

(54) **SYSTEME ET PROCEDE DE CAPTAGE DE COMPOSES DANS LES SOLS**
SYSTEM UND VERFAHREN ZUR ENTNAHME VON VERBINDUNGEN IM BODEN
SYSTEM AND METHOD FOR COLLECTING COMPOUNDS IN THE GROUND

(30) Priorité: 14.12.2010 FR 1060514
(43) Date de publication de la demande: 23.10.2013
(73) Titulaire: Afitex International, 28000 Chartres (FR)
(72) Inventeur: DURKHEIM, Yves, F-28000 Chartres (FR)
(74) Mandataire: Debay, Yves
(86) Numéro de dépôt international: PCT/FR2011/052984
(87) Numéro de publication internationale: WO 2012/080659

(56) Documents cités:
- DE-A1- 4 410 612
- US-A1- 2004 131 424
- US-A1- 2008 173 576

## Description

La présente invention concerne le domaine des systèmes de captage de composés chimiques dans les sols. L'invention s'applique par exemple au domaine minier, pour le captage de composés chimiques valorisables, tels que l'or ou le fer par exemple, mais également au domaine de la dépollution des sols, par exemple pour le captage de métaux lourds. La présente invention concerne plus particulièrement un système de captage de composés chimiques dans des agrégats tels que les sols, sédiments, déchets, etc. D'une manière générale, l'invention s'applique à tout type de composé chimique soluble ou pouvant être véhiculé par un fluide.

Un problème dans le domaine des systèmes de captage de composés dans les sols concerne l'accès difficile aux composés chimiques présents dans les sols. En particulier, dans le domaine de la dépollution, les métaux lourds qui sont présents par exemple dans les sols, les boues, les déchets, les sédiments et les eaux qui percolent sont difficiles et coûteux à éliminer. Ces métaux lourds peuvent être de nature chimique très variée. De même, dans le domaine minier, l'extraction des composés chimiques est particulièrement difficile, notamment lorsqu'ils sont présents sous forme de particules de petite taille, voire sous forme d'ions.

Il est connu dans l'art antérieur des systèmes de dépollution de métaux lourds utilisant des micro-organismes, des plantes ou des composés chimiques. D'autre part, divers types de dispositifs captant les métaux lourds sont connus de l'art antérieur. Lorsque les composés chimiques sont présents dans les sols, boues, sédiments, eaux, etc., les systèmes de l'art antérieur nécessitent souvent des manipulations du sol, tels que l'extraction et le conditionnement dans des containers par exemple, qui sont coûteuses et qui doivent être réalisées systématiquement et régulièrement. Il est par exemple connu des solutions dans lesquelles le sol est extrait et mélangé avec divers composés chimiques ou des solutions dans lesquelles le sol est extrait et convoyé sur divers dispositifs pour être soumis à divers traitements successifs.

Les solutions de l'art antérieur présentent en général les inconvénients d'être limitées en termes de capacité de traitement et/ou de nécessiter l'utilisation de grands volumes d'eau et/ou d'être trop coûteuses et/ou d'être mal adaptées à leur réutilisation pour des traitements successifs. Dans ce contexte, il est intéressant de proposer un système de captage efficace qui puisse être réutilisé en minimisant les manipulations.

Le brevet allemand DE 44 10 612 A1 décrit un système de drainage avec un support pour tuyau de drainage, selon le préambule de la revendication 1 ainsi qu'un procédé selon le préambule de la revendication 9.

Le système comprend une pluralité de couches de matériaux minéraux sur lesquels sont déposés des tuyaix de drainage. Le support de tuyau de drainage est installé entre les couches de matériaux minéraux et les tuyaux de drainage. Un géotextile est disposé également sur les couches de matériaux minéraux et est fixé au support de tuyaux de drainage. Ce système ne permet pas le captage de composés chimiques dans les sols.

Le brevet américain US 2008/0173576 A1 décrit un procédé de synthétisation de nanofils d'acier zéro-valent et leur application au traitement de nappes phréatiques chargés en chrome ou arsenic. Le procédé ne permet pas le captage de composés chimiques, ni le drainage de sol.

La présente invention a pour but de pallier au moins certains inconvénients de l'art antérieur en proposant notamment un système de captage de composés chimiques dans les sols, peu coûteux, efficace et réutilisable.

Ce but est atteint par un système de captage de composé chimique dans des agrégats selon la revendication 1

Selon une autre particularité, ledit géocomposite comporte au moins une nappe filtrante recouvrant les mini-drains perforés, de manière à filtrer ledit fluide.

Selon une autre particularité, ledit géocomposite est recouvert, avant le dépôt des agrégats, d'au moins un granulat de granulométrie déterminée en fonction de la vitesse cinétique de fixation des composés chimiques par lesdits fils fixateurs et/ou de la granulométrie des agrégats.

Selon une autre particularité, l'ouverture de filtration de ladite nappe filtrante est agencée pour maîtriser l'écoulement dudit fluide dans le géocomposite en fonction de la vitesse cinétique de fixation des composés chimiques par lesdits fils fixateurs et/ou de la granulométrie du granulat et/ou des agrégats.

Selon une autre particularité, chacun desdits fils fixateurs se prolonge en dehors de ladite surface jusqu'à au moins un dispositif d'attache des fils fixateurs, qui est accessible de façon à permettre le remplacement desdits fils fixateurs.

Selon une autre particularité, lesdits mini-drains sont parallèles entre eux.

Selon une autre particularité, le système comporte au moins une tranchée collectrice, ménagée dans et/ou au bord de ladite surface, et dont le fond est imperméable et situé à une hauteur inférieure à celle de ladite surface.

Selon une autre particularité, ladite tranchée collectrice est imperméable grâce à au moins une membrane imperméable disposée au fond de la tranchée et remontant jusqu'au niveau de ladite surface, de part et d'autre de la tranchée.

Selon une autre particularité, ladite tranchée débouche sur au moins un dispositif de pompage.

Selon une autre particularité, ledit dispositif de pompage débouche sur au moins un conduit évacuant le fluide à l'extérieur des agrégats.

Selon une autre particularité, ledit dispositif de pompage débouche sur au moins un conduit ramenant le fluide au-dessus des agrégats pour des passages successifs au travers dudit système ou en amont des mini-drains perforés pour des passages successifs dans ces derniers.

Selon une autre particularité, ladite surface est munie d'au moins une membrane sensiblement imperméable.

Techniques connues pour faire différence de perméabilité.

La présente invention a également pour but de pallier au moins certains inconvénients de l'art antérieur en proposant un procédé de captage de composés chimiques dans les sols peu coûteux, efficace et qui puisse être mis en oeuvre de façon répété en minimisant les manipulations.

Ce but est atteint par un procédé de captage de composé chimique dans des agrégats selon la revendication 9.

Selon une autre particularité, l'étape de dépôt des agrégats sur ledit géocomposite est précédée d'une étape de dépôt d'au moins une nappe filtrante recouvrant les mini-drains perforés, de manière à filtrer ledit fluide.

Selon une autre particularité, l'étape de dépôt des agrégats sur ledit géocomposite est précédée d'une étape de dépôt d'au moins un granulat de granulométrie déterminée en fonction de la vitesse cinétique de fixation des composés chimiques par lesdits fils fixateurs et/ou de la granulométrie des agrégats.

Selon une autre particularité, le procédé comporte au moins une étape d'attachement de chacun desdits fils fixateurs à au moins un dispositif d'attache des fils fixateurs accessible, permettant la mise en oeuvre d'au moins une étape de remplacement desdits fils fixateurs.

Selon une autre particularité, l'étape de création de ladite surface est accompagnée d'au moins une étape de création d'au moins une tranchée collectrice, dans et/ou au bord de ladite surface, et dont au moins le fond est imperméable et situé à une hauteur inférieure à celle de ladite surface.

Selon une autre particularité, ladite tranchée collectrice est imperméable grâce à au moins une étape de dépôt d'au moins une membrane imperméable sur les parois de la tranchée et remontant jusqu'au niveau de ladite surface, de part et d'autre de la tranchée.

Selon une autre particularité, l'étape de création de ladite tranchée comporte une étape de placement d'au moins un dispositif de pompage de la tranchée, qui débouche sur au moins un conduit, pour permettre la mise en oeuvre, soit d'une évacuation dudit fluide à l'extérieur des agrégats, soit d'une ré-aspersion dudit fluide au-dessus des agrégats, soit d'une recirculation dudit fluide dans les mini-drains perforés.

Selon une autre particularité, le procédé est mis en oeuvre dans un système selon l'invention.

D'autres particularités et avantages de la présente invention apparaîtront plus clairement à la lecture de la description ci-après, faite en référence aux dessins annexés, dans lesquels :
- la figure 1 représente une vue en perspective d'un système selon certains modes de réalisation de l'invention,
- la figure 2 représente une vue en perspective d'un système selon d'autres modes de réalisation de l'invention,
- la figure 3 représente une vue en coupe d'une partie d'un géocomposite, recouvert d'un granulat et d'agrégats, dans un système selon certains modes de réalisation de l'invention,
- la figure 4 représente une vue en perspective d'une partie d'un mini-drain utilisé dans un géocomposite d'un système selon certains modes de réalisation de l'invention, avec des fils fixateurs dépassant du mini-drain,
- la figure 5 représente une vue en perspective d'une partie d'un système au cours de sa mise en place selon certains modes de réalisation de l'invention,
- la figure 6 représente les étapes d'un procédé de captage de composé chimique selon certains modes de réalisation de l'invention.

La présente invention concerne un système (1) et un procédé de captage de composé(s) chimique(s), en particulier dans des agrégats. Le terme « agrégat » est utilisé ici dans son acception générale de « réunion d'un ensemble d'éléments distincts, de nature identique ou différentes». Ce terme est utilisé au pluriel pour signifier qu'il regroupe éventuellement de nombreux éléments mais peut en fait consister en un seul type d'agrégat, contenant lui-même un seul type d'élément ou plusieurs éléments hétérogènes. Ce terme recouvre donc d'une manière générale la définition des sols, des sédiments, des boues ou des déchets. Par exemple, cet agrégat pourra en fait être le sol dans lequel on aura creusé pour mettre en place la présente invention. L'homme de métier comprendra à la lecture de la présente demande que ce terme n'est pas limité aux exemples fournis ici et que l'invention peut être utilisée pour tout type d'éléments du moment qu'une percolation est possible au travers de l'élément ou des éléments dans lesquels les composés chimiques à capter sont présents. En effet, la présente invention est particulièrement efficace pour la dépollution des sols et peut être utilisée pour la dépollution de déchets, notamment de décharges enfouies par exemple. La présente invention peut être utilisée aussi dans le domaine minier, notamment pour capter des composés chimiques valorisables, comme par exemple des métaux précieux. Les fluides, notamment les eaux, qui percolent à travers les agrégats (sols, sédiments, déchets, etc.) sont souvent pollués car ils se chargent en polluants de diverses natures, de sorte que le fluide ou percolats qui en résultent doivent être dépollués. La présente invention tire avantage de ce phénomène et permet donc de dépolluer des agrégats en utilisant de tels fluides et en les dépolluant. De même, dans le domaine minier, on peut utiliser un fluide qui traversera les agrégats et qui véhiculera les composés chimiques à extraire, pour permettre de les capter directement dans le fluide. L'homme de métier comprendra que les fluides utilisés pourront par exemple, être naturellement des eaux de pluie ou de l'eau aspergée exprès sur les agrégats si besoin en est, ou même tout autre type de fluide qui pourra être choisi en fonction du ou des composé(s) que l'on cherche à capter. On choisira en général un liquide dans lequel les composés à capter sont solubles ou qui permet au moins de véhiculer ces composés au travers des agrégats dans lesquels ils se trouvent. On notera que l'on peut également utiliser divers types de fluides, mélangés ou successifs et qu'il ne s'agit pas nécessairement d'un seul fluide.

Le système (1) selon l'invention comporte au moins une surface sur laquelle est disposée au moins un géocomposite (2). Cette surface pourra être munie d'au moins une membrane sensiblement imperméable (4), avant la pose du géocomposite (2), pour fournir un contraste de perméabilité entre ladite surface et le géocomposite. En effet, pour que le géocomposite joue pleinement son rôle de drainage et de récolte du fluide, tel que détaillé dans la présente demande, il est nécessaire qu'il présente une meilleure perméabilité que le support sur lequel il est disposé. Ainsi, on pourra prévoir une membrane, un film ou un textile moins perméable que le géocomposite, ou même prévoir le dépôt de sédiments argileux ou de sédiments compactés ou de tout autre type de matériau qui sera moins perméable que le géocomposite (2) pour que le fluide passe préférentiellement par le géocomposite. Dans le cas de fluides dont on souhaite qu'ils ne pénètrent pas du tout le sous-sol, on disposera par exemple une membrane complètement imperméable, en particulier lorsqu'il s'agit d'une dépollution des agrégats. Cette membrane pourra par exemple être une membrane en PEHD (PolyEthylene Haute Densité) pour garantir une bonne solidité et une bonne étanchéité. On entend donc dans la présente demande, par le terme « membrane imperméable » ces différentes possibilités, qu'il s'agisse effectivement d'une membrane ou non (sédiments, textiles ou autres) et que l'imperméabilité soit relative (« sensiblement ») ou totale (« complètement »). Dans certains modes de réalisation, cette surface présente au moins une légère pente pour faciliter l'écoulement du fluide (L) et son drainage. Cependant, on préfère éventuellement une surface plane sans pente pour un écoulement lent permettant un meilleur captage des composés chimiques. De plus, l'invention utilise, dans certains modes de réalisation, au moins un dispositif de pompage qui améliore la circulation de fluide dans le système et qui rend relativement inutile l'utilisation de pente(s) sur cette surface..

Sur cette surface ménagée dans le sol (par exemple à même le sol ou au fond d'un bassin, comme expliqué dans la présente demande) est disposée au moins un géocomposite (2) comportant au moins une nappe drainante (22) sur laquelle sont disposés des mini-drains perforés (23) contenant chacun au moins un fil (24) fixateur de composé chimique. Les agrégats (S) sont déposés sur ledit géocomposite (2) de façon à ce qu'un fluide (L), qui se charge en composé(s) chimique(s) en traversant les agrégats (S), gagne l'intérieur desdits mini-drains perforés (23) dans lesquels lesdits fils fixateurs (24) captent le(s) composé(s) chimique(s). Un type de fil donné pourra éventuellement fixer plusieurs composés à la fois. On comprend que l'on utilise le terme « composés chimiques » au pluriel mais que l'invention peut être spécifique d'un seul type de composé ou peut viser plusieurs composés en même temps. D'une manière générale, l'utilisation du singulier ou du pluriel dans la présente demande n'est nullement limitatif. On pourra également utiliser une pluralité de fils fixateurs, avec au moins un type de fil par composé recherché, pour une fixation de plusieurs composés par le système. Par exemple, il est connu des dispositifs capables de capter les métaux lourds. L'invention propose d'agencer ces dispositifs sous forme de fils afin de les placer dans les mini-drains perforés (23) au sein desquels ils seront exposés au fluide (L) pour y capter le composé chimique (métal lourd par exemple) dont ils sont spécifiques (respectivement). On peut également prévoir des fils fixateurs d'autres composés, mais l'invention est particulièrement adaptée à la fixation de métaux (notamment précieux ou lourds) dans les mini-drains. Ainsi, on pourra par exemple prévoir au moins un fil fixateur de plomb et au moins un fil fixateur de zinc, etc.

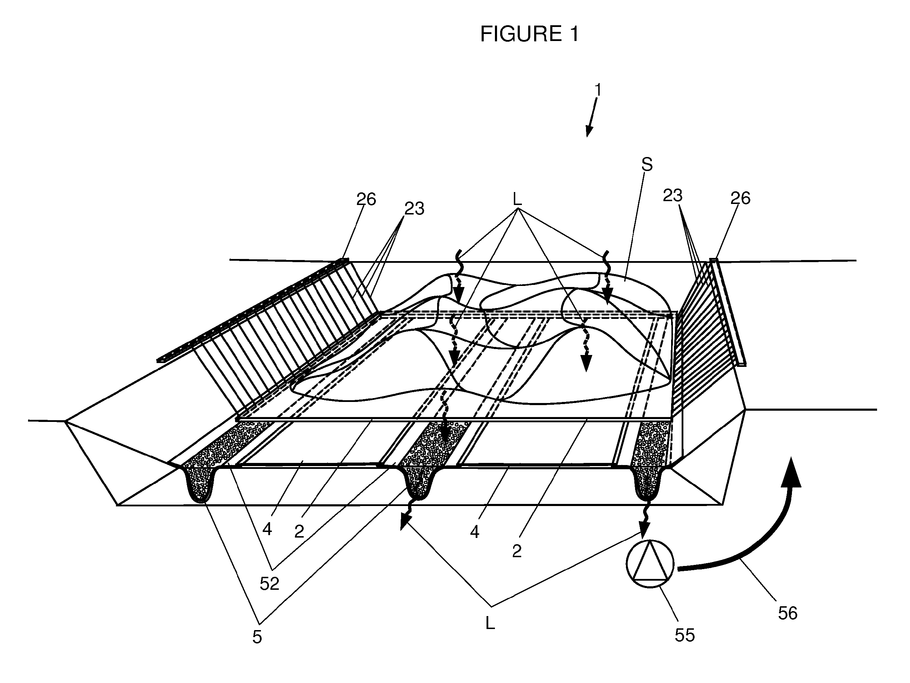

Dans certains modes de réalisation, le système se présente sous la forme d'un bassin comme dans l'exemple représenté sur la figure 1. Dans ces modes de réalisation, une cavité est ménagée dans le sol, avec au fond de cette cavité, ladite surface munie de la membrane imperméable (4), sur laquelle est disposée le géocomposite (2). Les agrégats (S) (comme par exemple le sol creusé pour réaliser la cavité et/ou d'autres types d'agrégats) sont alors déposés sur le géocomposite (2) qui permet de drainer le fluide (L) dans les mini-drains (23). On notera que l'on peut également disposer au moins une membrane imperméable sur les talus formant les bords de cette cavité, de façon à éviter des fuites du fluide dans le sol par les bords du bassin.

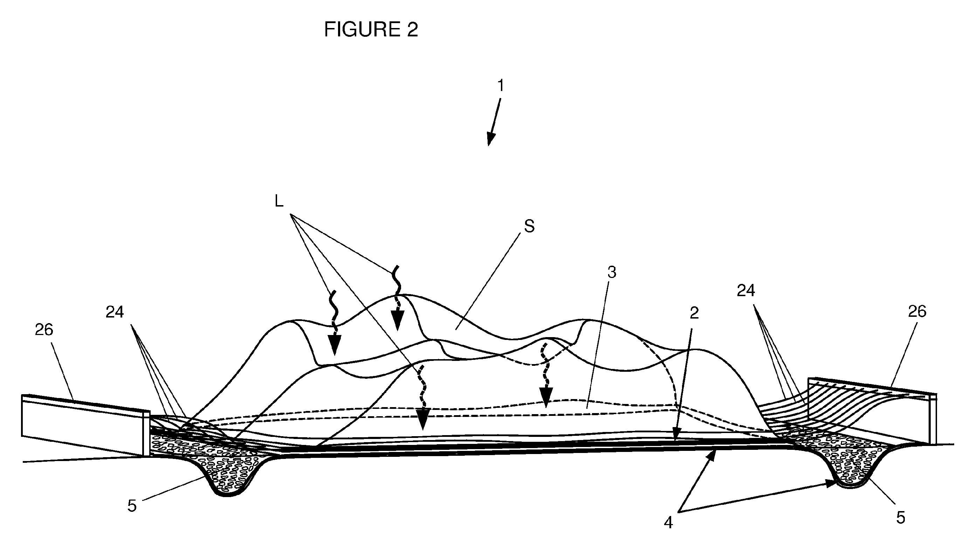

Dans certains modes de réalisation, le système se présente sous la forme d'une plateforme comme dans l'exemple représenté sur la figure 2. Dans ces modes de réalisation, ladite surface recevant le géocomposite (2) est ménagée à même le sol, de préférence avec des tranchées collectrices (5) ménagées au moins sur les bords de ladite surface, comme expliqué dans la présente demande. Les agrégats (S) sont déposés en tas sur le géocomposite.

Lesdits mini-drains (23) sont de préférence parallèles entre eux.

De façon non limitative, les mini-drains (23) peuvent être répartis de façon à ce qu'ils soient espacés d'une distance allant de 0,2 mètre à 4 mètres de largeur du géocomposite (2), de préférence entre 0,5 et 2 mètres, idéalement de l'ordre du mètre.

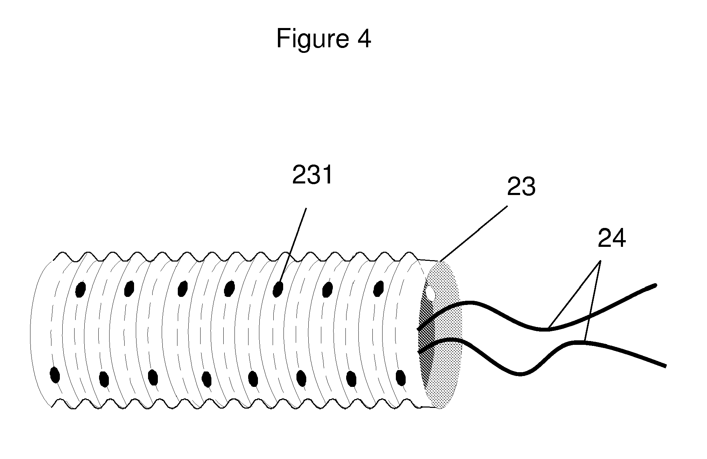

Dans certains modes de réalisation, les mini-drains (23) perforés possèdent des perforations (231) qui, au lieu d'être rondes sont ovales ou oblongues pour limiter la résistance à l'entrée de fluide et ainsi de limiter le colmatage des perforations (231, fig. 4). De manière illustrative et non limitative, ces perforations pourront avoir une taille de l'ordre de 0,5 millimètre à 2 millimètres, de préférence de 0,7 à 1,5 mm, idéalement de l'ordre du millimètre. De plus, dans certains modes de réalisation, les mini-drains sont annelés, comme représenté sur la figure 4, pour fournir une meilleure résistance à la pression, ce qui permet leur enfouissement sous une quantité considérable d'agrégats. Les mini-drains (23) ont pour but de capter le fluide (L) en vue d'un drainage. Ils sont en général, de façon illustrative et non limitative, résistants à des pressions allant jusqu'à 750 kPa ce qui correspond à environ 60 m de hauteur d'agrégats (S) en moyenne au-dessus du mini-drain. Les mini-drains (23) sont résistants à la compression ce qui permet aux fluides de toujours pouvoir être évacués même lorsque le géocomposite (2) est enterré sous des agrégats (dans le sol par exemple). Selon divers modes de réalisation, de façon non limitative, afin d'avoir une optimisation du flux du fluide, les mini-drains (23) peuvent avoir des diamètres compris entre 5 mm et 50 mm, de préférence entre 10 mm et 25 mm, idéalement de l'ordre de 25 mm. En fonction du nombre de fils fixateurs (et de types de fils fixateurs) que l'on souhaite utiliser, on pourra prévoir des diamètres variables. Néanmoins, le diamètre des mini-drains ne doit pas excéder une certaine valeur pour une composition et un agencement donnés des mini-drains, de façon à ce qu'ils résistent au poids des agrégats (S) comme mentionné ci-dessus.

Dans certains modes de réalisation, ledit géocomposite (2) comporte au moins une nappe filtrante (25) recouvrant les mini-drains perforés (23), de manière à filtrer ledit fluide (L). Ainsi, dans ces modes de réalisation, les mini-drains (23) sont pris en sandwich entre au moins une nappe filtrante (25) supérieure et une nappe drainante (22) inférieure. Dans certains modes de réalisation, une nappe filtrante (25) est disposée directement sur la nappe drainante (22), en-dessous des mini-drains (23). Dans certains modes de réalisation, non exclusifs des précédents, une seconde nappe filtrante peut être rajoutée au-dessus de la première nappe filtrante recouvrant les mini-drains (23), de façon à optimiser la filtration du fluide. On peut également multiplier les couches de nappes filtrantes éventuellement, aussi bien au-dessus qu'en-dessous des mini-drains. On pourra par exemple, en particulier pour les nappes filtrantes situées au-dessus des mini-drains, choisir une nappe filtrante supérieure ayant une ouverture de filtration supérieure à la nappe filtrante inférieure, de façon à obtenir un filtrage progressif du fluide par les couches successives de nappes filtrantes. De façon illustrative et non limitative, l'ouverture de filtration d'une nappe filtrante (25) utilisée dans l'invention pourra être comprise entre 40 et 400 µm, de préférence entre 80 µm et 250 µm, idéalement de l'ordre de 120 µm.

Les nappes filtrantes (25) ont pour but de protéger la nappe drainante (22) du colmatage par de fines particules. De telles nappes ont par conséquent une porométrie adaptée à cette fonction, de même que la nappe drainante à une porométrie adaptée à sa fonction.

On notera que l'on parle ici de « nappe » qui est un terme classique pour un géotextile, correspondant en général à un enchevêtrement de fils aiguilletés qui peut être désigné également par le terme « feutre », mais il est possible d'utiliser d'autres types de revêtements, de préférence des géotextiles, tels que par exemple des textiles tissés ou non, tricotés ou non, etc.. Ce terme de « nappe » désignant classiquement un type de textile doit donc être interprété de façon moins limitative dans la présente demande car il est prévu de pouvoir utiliser d'autres types de revêtement que les nappes de géotextiles, bien que ces dernières soient particulièrement adaptées à la présente invention. En effet, les enchevêtrements de fils aiguilletés fournissent en général des perméabilités particulièrement adaptées à la présente invention mais pour adapter l'écoulement de fluide (L) au captage de composés chimiques par les fils fixateurs (24) présents dans les mini-drains (23), il est possible d'utiliser d'autres types de revêtement ou même des combinaisons de ces nappes de géotextiles avec d'autres revêtements.

De plus, on notera que la présente demande mentionne l'utilisation d'au moins géocomposite et qu'il peut en fait être fait utilisation de plusieurs géocomposites. En particulier, il est possible d'utiliser plusieurs géocomposites superposés ou un géocomposite comportant une pluralité de couches (nappes, mini-drains, etc.) telles que décrites dans la présente demande, notamment dans le cas où plusieurs types de fils fixateurs spécifiques de divers types de composés chimiques sont souhaités dans le système. En effet, en fonction des vitesses cinétiques de captage, on pourra disposer dans des couches successives d'un même géocomposite ou de géocomposites superposés, des nappes possédant des perméabilités différentes, la perméabilité de chaque nappe étant adaptée au type de fils fixateurs présents dans ses mini-drains. Par exemple, une première couche comportant au moins une nappe drainante très perméable pourra contenir des fils fixateurs ayant une vitesse de captage élevée, tandis qu'une couche inférieure moins perméable retiendra plus longtemps le fluide au contact de ses fils fixateurs ayant une vitesse de captage plus lente.

Dans certains modes de réalisation, ledit géocomposite (2) est recouvert, avant le dépôt des agrégats (S), d'au moins un granulat (3) de granulométrie déterminée en fonction de la vitesse cinétique de fixation (de captage) des composés chimiques par lesdits fils fixateurs (24) et/ou de la granulométrie des agrégats (S). La présence de la nappe filtrante (25) permet en général de diminuer, par exemple de moitié, l'épaisseur de la couche de granulats généralement nécessaire pour le filtrage du fluide. On peut même éventuellement se passer de granulat (3) selon le type d'agrégats, de même que l'on peut éventuellement se passer de nappe filtrante bien que ce soit rare car les fines particules risqueraient de boucher les perforations des mini-drains. Néanmoins, selon le type d'agrégats, en déposant une pluralité de granulats (3) sur le géocomposite (2), avec des granulométries précisément choisies, on obtient une rétention des particules les plus fines par les plus grosses et l'on peut ainsi former un filtre par une succession de granulats différents, mais on préfère l'utilisation d'une nappe filtrante qui simplifie l'agencement. En général, l'ouverture de filtration de ladite nappe filtrante (25) est agencée pour maîtriser l'écoulement du fluide (L) dans le géocomposite (2). Cette ouverture de filtration peut être adaptée en fonction de la vitesse cinétique de fixation des composés chimiques par lesdits fils fixateurs (24). Elle pourra également adaptée en fonction de la granulométrie du granulat (3). Elle peut également être adaptée en fonction de la granulométrie et/ou de la composition des agrégats (S). D'une manière générale, la nappe filtrante (25) est prévue en fonction de tous ces facteurs, de manière à maîtriser le flux dans les mini-drains (23). La hauteur de fluide (L) (et donc la pression exercée) dans le géocomposite est importante pour la pénétration du fluide dans les mini-drains (23) et doit être adaptée à la vitesse cinétique de fixation des composés chimiques par les fils fixateurs (24). En effet, par exemple dans le cas de fils fixateurs de métaux lourds, la vitesse d'échange ionique détermine le flux de fluide que le géocomposite doit pouvoir drainer. On notera que lorsque l'on prévoit plusieurs types de fils fixateurs spécifiques de différents métaux lourds par exemple, on adaptera généralement le flux à la vitesse d'échange la plus faible de ces divers types de fils fixateurs (24). Selon la vitesse cinétique du captage des composés dans les mini-drains, la vitesse d'écoulement pourra être régulée par le dimensionnement de l'ouverture de filtration de la nappe filtrante (25) et/ou de l'ouverture de drainage de la nappe drainante (22). Ainsi, le dimensionnement des constituants du géocomposite (2) est déterminant pour le flux et pour le captage des composés dans les mini-drains. La nappe filtrante est de préférence agencée pour filtrer le fluide et calibrer les particules qui pénètrent dans le géocomposite alors que la drainante est de préférence agencée pour faciliter la circulation du fluide dans le géocomposite. Ces deux nappes auront donc des ouvertures différentes, adaptées respectivement à leur fonction.

Dans certains modes de réalisation de l'invention, chacun desdits fils fixateurs (24) présents dans les mini-drains se prolonge en dehors de ladite surface jusqu'à au moins un dispositif d'attache (26) des fils fixateurs (24), qui est accessible de façon à permettre le remplacement desdits fils fixateurs (24). Dans certains modes de réalisation, ce sont les mini-drains (23) complets qui se prolongent en dehors du géocomposite (2) et de la surface, de façon à protéger les fils jusqu'au dispositif d'attache (26), comme par exemple représenté sur la figure 1, mais on peut prévoir que les mini-drains (23) s'arrêtent dans le géocomposite (2) et que seuls les fils (24) se prolongent, nus comme par exemple représenté sur la figure 2, ou enveloppés dans un autre élément protecteur (non représenté).

Ainsi, comme représenté aussi bien en figure 1 qu'en figure 2, on peut prévoir un dispositif d'attache (26) facilement accessible, par exemple disposé l'extérieur du sol. Une fois les fils fixateurs (24) saturés en composé chimique, on peut alors aisément les remplacer pour permettre de poursuivre l'utilisation du système selon l'invention. De même la réutilisation du système se trouve facilitée lorsque les agrégats ont été suffisamment exploités ou dépollués puisqu'il suffit de retirer ces derniers pour en déposer de nouveau, en remplaçant les fils fixateurs si besoin, que ce soit avant ou après le remplacement des agrégats.

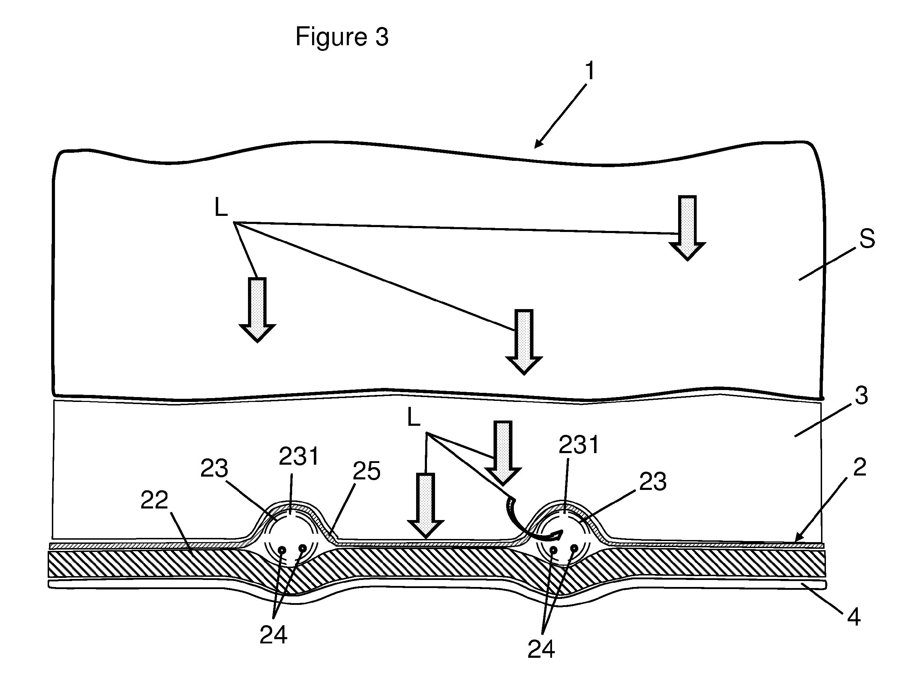

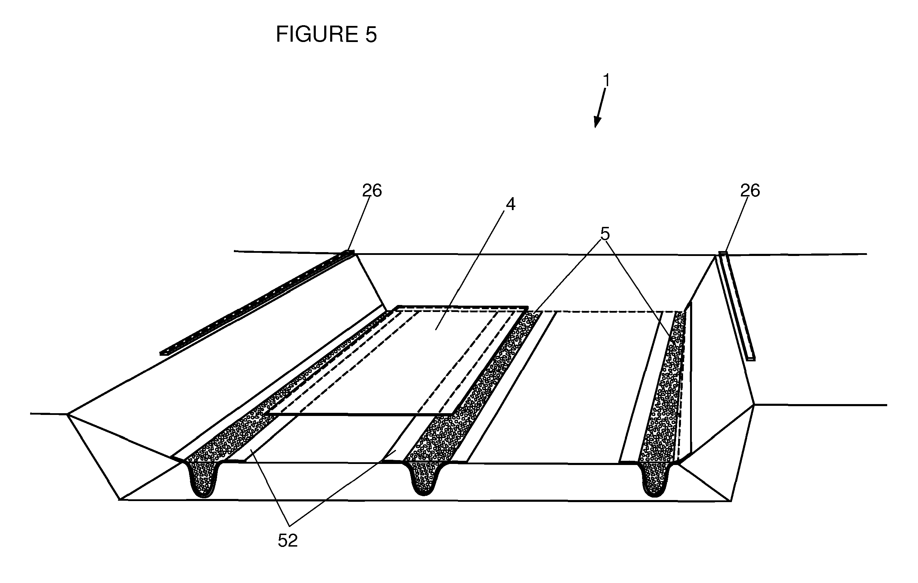

Dans certains modes de réalisation de l'invention, le système comporte au moins une tranchée (5) collectrice, ménagée dans et/ou au bord de ladite surface, et dont le fond est imperméable et situé à une hauteur inférieure à celle de ladite surface, comme représenté sur les figures 1 et 2 par exemple. Comme mentionné précédemment, les mini-drains sont de préférence parallèles entre eux et les tranchées (5) sont alors de préférence perpendiculaires aux mini-drains. On choisira une répartition donnée des tranchées (5), de préférence régulière, en fonction de la perméabilité des agrégats et/ou du type de fluide et/ou de la vitesse de captage des composés, de façon à ce que les mini-drains baignent dans une quantité de fluide optimale pour le captage des composés chimiques. Dans certains modes de réalisation de l'invention, ladite tranchée (5) collectrice est imperméable grâce à une membrane imperméable (52), par exemple en PEHD, qui permet d'éviter la percolation du fluide dans le sous-sol. Dans certains modes de réalisation, comme dans l'exemple représenté sur la figure 1, cette membrane est disposée au fond de la tranchée (5) et remonte jusqu'au niveau de ladite surface, de part et d'autre de la tranchée (5). Dans ce cas, on peut prévoir que la membrane imperméable (4) couvrant ladite surface s'étende au moins jusqu'à proximité des tranchées, au-dessus de la membrane imperméable (52) tapissant les parois des tranchées ou prévoir qu'elle soit soudée à cette dernière, comme dans l'exemple de la figure 1, ou carrément qu'elle s'étende jusqu'à la tranchée pour déboucher dedans, comme représenté sur la figure 5. On notera que dans les divers modes de réalisation possibles de l'invention, la membrane imperméable (4) qui recouvre ladite surface pourra être intégrée au géocomposite (2) qui comportera alors une surface inférieure imperméable. Cependant, dans la plupart des modes de réalisation, on préfère séparer la membrane imperméable (4) du géocomposite (2), notamment pour faciliter la fabrication du géocomposite (notamment dans le cas de nappes non tissées aiguilletées qui nécessiterait un ajout ultérieur d'une membrane imperméable) et à cause du drainage du fluide. En effet, les tranchées collectrices sont ménagées sous le géocomposite (2) pour collecter le fluide à des espaces déterminés et ces tranchées doivent comporter un fond imperméable, généralement obtenu grâce à au moins une membrane imperméable (52) déposée au fond de la tranchée. Ainsi, on peut plutôt n'utiliser qu'une seule membrane imperméable (4) disposée sur ladite surface et épousant le fond des tranchées, par exemple comme représenté sur la figure 2. Ainsi, le fluide est drainé par le géocomposite (2) au-dessus de la membrane imperméable (4) et se déverse naturellement au fond des tranchées imperméables. Comme mentionné précédemment, on peut obtenir un contraste de perméabilité, entre le géocomposite et le support sur lequel il est disposé, autrement que par l'utilisation d'une réelle membrane (ce terme ne devant donc pas être interprété de façon limitative). Il en est de même pour les tranchées. Le terme de membrane imperméable est utilisé ici d'une façon générale, mais on doit comprendre que l'imperméabilité peut être relative ou totale et qu'il peut s'agir d'autres types de revêtement qu'une membrane, de la même manière qu'expliqué pour la « membrane » (4) recouvrant éventuellement la surface qui reçoit le géocomposite (2). Ainsi, bien que les figures 1, 2, 3 et 5 représentent de telles membranes (4, 52), on pourra les omettre ou les remplacer par d'autres agencements.

La figure 5 représente la mise en place de telles tranchées (5), avant le dépôt du géocomposite (2), avec la membrane imperméable (52) débordant sur ladite surface et avec la membrane imperméable (4) recouvrant ladite surface qui chevauche les bords de cette membrane imperméable (52) des tranchées (5).

Dans certains modes de réalisation, on ajoute dans les tranchées un granulat permettant de remplir la tranchée et/ou de réguler l'écoulement du fluide dans la tranchée, comme représenté par exemple sur les figures 1, 2 et 5.

Dans certains modes de réalisation de l'invention, ladite tranchée (5) débouche sur au moins un dispositif de pompage (55). On dispose de préférence dans les tranchées des drains collecteurs (de diamètre supérieur à celui des mini-drains) pour récolter le fluide drainé par le géocomposite et ces drains collecteurs (non représentés) sont connectés au dispositif(s) de pompage (qui peut être en-dehors de la tranchée, pour autant qu'il soit capable de pomper le fluide de la tranchée). Selon divers modes de réalisation, ledit dispositif de pompage (55) débouche sur au moins un conduit (56) évacuant le fluide (L) à l'extérieur des agrégats (S) ou débouche sur au moins un conduit (56) ramenant le fluide (L) au-dessus des agrégats (S) pour des passages successifs au travers dudit système (1) ou en amont des mini-drains perforés (23) pour des passages successifs dans ces derniers. Un dispositif de mesure de la teneur en métaux lourds et/.ou de l'échange ionique pourra être disposé à l'extrémité d'au moins certains mini-drains et/ou dans les tranchées collectrices pour déterminer si les fils sont saturés et s'il faut les changer et/ou déterminer si l'on doit faire recirculer le fluide dans les drains et/ou dans les agrégats.

La nappe drainante (22) et la nappe filtrante (25) sont de préférence non tissées. Dans certains modes de réalisation de l'invention, les nappes drainante (22) et filtrante (25) sont non tissées aiguilletées. Ces deux nappes sont de préférence liées entre elles par la technique de l'aiguilletage. Sur la nappe drainante (22) sont disposés, parallèles entre eux, à des distances choisies en fonction de la destination du géocomposite (2), des mini-drains (23) perforés, de préférence annelés, dont les performations sont alternés à approximativement 90°. De préférence, chaque gorge des annelures d'un mini-drain (23) est munie de deux perforations (231) diamétralement opposées et les perforations (231) de deux gorges successives sont décalées entre elles de 90°. Dans certains modes de réalisation, cette couche de mini-drains (5) est recouverte d'une nappe filtrante (31) non tissée aiguilletée. Au cours de l'aiguilletage des nappes, des espaces peuvent être prévus pour y disposer les mini-drains (23). Ces mini-drains (23) sont par conséquent liés à la structure du géocomposite (2) puisqu'ils sont déjà mis en place entre les nappes au moment de leur aiguilletage.

La liaison inter-nappes réalisée par aiguilletage confère au géocomposite (2) plusieurs qualités. En effet, ce mode de liaison des nappes offre un géocomposite possédant une résistance aux cisaillements internes accrue. Cette résistance est telle que le géocomposite (2) peut être utilisé pour le drainage de talus pentus. La liaison par aiguilletage permet également d'offrir un géocomposite (2) dont les faces filtrantes ont une porométrie uniforme et constante. Un géocomposite (2) dont les liaisons sont réalisées par aiguilletage présente une solidité accrue à la pose et en cours d'utilisation car les contraintes subies s'appliquent à toute la masse et non pas en quelques points bien précis de la structure. Enfin, la qualité filtrante du géocomposite (2) n'est pas altérée comme c'est le cas avec une liaison par collage ou par couture.

De préférence, les différents éléments composant le géocomposite (2) sont constitués de matériaux imputrescibles comme par exemple du polypropylène. En général, les nappes drainante (22) et filtrante (25), ainsi que les mini-drains (23), sont de préférence résistants à un milieu acide ou basique.

Souvent, notamment dans le domaine des stockages de déchets, il est nécessaire de récupérer le fluide produits par ces déchets ou ceux produits après l'aspersion des déchets par au moins un fluide qui peut être de l'eau et/ou un solvant et/ou un acide par exemple. On notera que le terme « fluide » est utilisé dans la présente demande de manière égale que ce fluide ait été ajouté aux agrégats (S) ou produit par eux-mêmes. Ce fluide percolent par exemple au fond des casiers dans lesquels sont stockés les déchets pour être récupéré par un système d'évacuation afin qu'ils ne pénètrent pas le sol dans lequel les déchets sont enterrés. Or, le fluide provenant de déchets sont chargés en particules bactériologiques et fongiques qui, à long terme, peuvent colmater le géocomposite (2). Ceci a pour conséquence d'arrêter le passage du fluide et de rendre inefficace le géocomposite (2). Dans certains modes de réalisation, de façon à pallier à ce problème, au moins la nappe filtrante (25) supérieure est composée de fibres qui ont été extrudées avec au moins un principe actif antibactérien et/ou bactéricide et/ou fongicide. Ce principe actif peut être noyé dans les fibres de façon à être présent sur la surface des fibres et au coeur des fibres. Cette répartition permet à moyen et long termes une migration des agents antibactériens et/ou bactéricides et/ou fongicides à la surface des fibres, rendant le produit efficace à long terme.

Les nappes sont de préférence composées de fibres de diamètre important, au moins en ce qui concerne les nappes filtrantes (25). Ce diamètre correspond par exemple à un titrage des fibres ou une masse linéique des fils compris entre 4 dtex (ou « dtx », abréviation de décitex) et 110 dtex en considérant que 1 dtex correspond à 1 mg de matière composant les fibres pour 1 m de fibre. Ceci permet d'avoir une grande ouverture de filtration et d'avoir une composante de vitesse de perméabilité normale au plan du géocomposite (2) qui soit assez importante pour que cela influe sur la durée de contact entre le géocomposite (2) et le fluide. En réduisant cette durée de contact dans la nappe filtrante, le colmatage dû aux bactéries ou aux champignons est réduit. Le fluide drainé s'accumule dans les mini-drains où la durée de contact sera suffisante pour que les fils fixateurs (24) captent les composés chimiques.

On comprend donc que la présente invention concerne un système qui permet le captage de composés chimiques, notamment de métaux lourds ou précieux, dans des agrégats en général, et en particulier des sols, déchets, sédiments, boues, etc.

Selon l'invention, il suffit de déposer les agrégats sur le système et de laisser un fluide percoler au travers des agrégats. Le fluide peut être de l'eau, comme de l'eau de pluie en général, mais peut également être modifié, par exemple pour rendre l'eau acide ou peut être de nature variée. Dans le cas de décharges enfouies, lors de leur retraitement, on évacue les déchets et les fines (composants organiques résiduels), notamment en vue d'un tri et d'une valorisation dans le meilleur des cas. L'invention permet que l'on prévoie une réutilisation non polluante de la zone de décharge en ménageant au fond de celle-ci un système selon l'invention qui fonctionnera de manière autonome, sans se boucher et permettra l'élimination de nombreux polluants. Le fait que l'on puisse remplacer facilement les fils fixateurs est également un avantage, notamment dans ce domaine car les décharges enfouies sont généralement prévues pour une durée de sédimentation de plusieurs années, voire dizaines d'années.

L'homme de métier comprend de la présente description que la circulation du fluide dans le système est un facteur important et que divers paramètres influent sur cette circulation. On régulera en général la circulation en fonction de la vitesse cinétique de captage des composés chimiques. Pour cela, on peut choisir d'agencer ladite surface de telle sorte qu'elle présente une légère pente, de préférence parallèle à l'orientation des mini-drains et perpendiculaire aux tranchées, mais on préfère généralement une surface plane non pentue pour pouvoir réguler la circulation avec les propriétés du géocomposite et/ou le pompage du fluide dans les tranchées. De même, le fond des tranchées peut être en pente ou non et l'on peut choisir de réguler le pompage dans les tranchées grâce aux drains collecteurs et/ou aux granulats dans les tranchées et/ou à la répartition de plusieurs dispositifs de pompage.

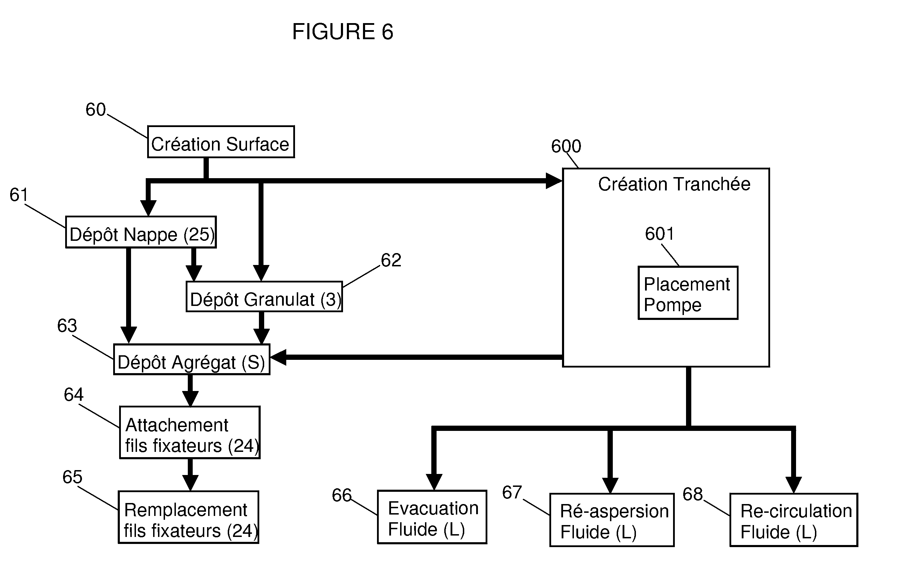

L'invention prévoit donc un procédé pour mettre en place un tel système et permettre le captage de composés chimiques qui s'en suit par la percolation de fluide. Le procédé pourra naturellement comporter au moins une étape (unique ou répétée autant que de besoin) d'aspersion d'au moins un type de fluide sur les agrégats déposés sur le système, mais cette étape est optionnelle car le fluide peut être obtenu à partir des eaux de pluie ou, notamment dans le cas de déchets, être produit directement par les agrégats eux-mêmes, comme mentionné précédemment. Un exemple de réalisation du procédé est représenté schématiquement sur la figure 6 montrant la plupart des étapes possibles du procédé, même certaines étapes optionnelles.

Le procédé peut être mis en oeuvre dans un système selon l'invention. Le procédé de captage de composé chimique dans des agrégats (S) comporte une étape de création (60) d'au moins une surface munie d'au moins une membrane imperméable sur laquelle est disposée au moins un géocomposite (2) comportant au moins une nappe drainante (22) sur laquelle sont disposés des mini-drains perforés (23) contenant chacun au moins un fil (24) fixateur de composé chimique. Une étape de dépôt (63) d'agrégats (S) sur ledit géocomposite (2) permet qu'un fluide (L), qui se charge en composé chimique en traversant lesdits agrégats (S), gagne l'intérieur desdits mini-drains perforés (23) dans lesquels lesdits fils fixateurs (24) captent le(s) composé(s) chimique(s).

Dans certains modes de réalisation, l'étape de dépôt (63) des agrégats (S) sur ledit géocomposite (2) est précédée d'une étape de dépôt (61) d'au moins une nappe filtrante (25) recouvrant les mini-drains perforés (23), de manière à filtrer ledit fluide(L).

Dans certains modes de réalisation, l'étape de dépôt (63) des agrégats (S) sur ledit géocomposite (2) est précédée d'une étape de dépôt (62) d'au moins un granulat (3) de granulométrie déterminée en fonction de la vitesse cinétique de fixation des composés chimiques par lesdits fils fixateurs (24) et/ou de la granulométrie des agrégats (S).

Dans certains modes de réalisation, le procédé comporte au moins une étape d'attachement (64) de chacun desdits fils fixateurs (24) à au moins un dispositif d'attache (26) des fils fixateurs (24) accessible, permettant la mise en oeuvre d'au moins une étape de remplacement (65) desdits fils fixateurs (24).

Dans certains modes de réalisation, l'étape de création (60) de ladite surface est accompagnée d'au moins une étape de création (600) d'au moins une tranchée (5) collectrice, dans et/ou au bord de ladite surface, et dont au moins le fond est imperméable et situé à une hauteur inférieure à celle de ladite surface. Dans certains de ces modes de réalisation, ladite tranchée (5) collectrice est imperméable grâce à au moins une étape de dépôt d'au moins une membrane imperméable (52) sur les parois de la tranchée (5) et remontant jusqu'au niveau de ladite surface, de part et d'autre de la tranchée (5).

Selon divers modes de réalisation, l'étape de création de ladite tranchée (5) comporte une étape de placement (601) d'au moins un dispositif de pompage (55) de la tranchée, débouchant sur au moins un conduit (56) pour permettre la mise en oeuvre, soit d'une évacuation (66) le fluide (L) à l'extérieur des agrégats (S), soit d'une ré-aspersion (67) du fluide (L) au-dessus des agrégats (S), soit d'une recirculation (68) du fluide (L) dans les mini-drains perforés (23).

La présente demande décrit diverses caractéristiques techniques et avantages en référence aux figures et/ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Système (1) de captage de composé chimique dans des agrégats (S), comportant au moins une surface sur laquelle est disposée au moins un géocomposite (2) comportant au moins une nappe drainante (22) sur laquelle sont disposés des mini-drains perforés (23) des agrégats (S) étant déposés sur ledit géocomposite (2) de façon à ce qu'un fluide (L), qui se charge en composé chimique en traversant les agrégats (S), gagne l'intérieur desdits mini-drains perforés (23) **caractérisé en ce que** les mini-drains perforés (23) contiennent chacun au moins un fil fixateur (24) de composé chimique, lesdits fils fixateurs (24) captant le(s) composé(s) chimique(s).

2. Système selon la revendication 1, **caractérisé en ce que** ledit géocomposite (2) comporte au moins une nappe filtrante (25) recouvrant les mini-drains perforés (23), de manière à filtrer ledit fluide (L).

3. Système selon une des revendications 1 ou 2, **caractérisé en ce que** ledit géocomposite (2) est recouvert, avant le dépôt des agrégats (S), d'au moins un granulat (3) de granulométrie déterminée en fonction de la vitesse cinétique de fixation des composés chimiques par lesdits fils fixateurs (24) et/ou de la granulométrie des agrégats (S).

4. Système selon une des revendications 2 et 3, **caractérisé en ce que** l'ouverture de filtration de ladite nappe filtrante (25) est agencée pour maîtriser l'écoulement dudit fluide (L) dans le géocomposite (2) en fonction de la vitesse cinétique de fixation des composés chimiques par lesdits fils fixateurs (24) et/ou de la granulométrie du granulat (3) et/ou des agrégats (S).

5. Système selon une des revendications 1 à 4, **caractérisé en ce que** chacun desdits fils fixateurs (24) se prolonge en dehors de ladite surface jusqu'à au moins un dispositif d'attache (26) des fils fixateurs (24), qui est accessible de façon à permettre le remplacement desdits fils fixateurs (24).

6. Système selon une des revendications 1 à 5, **caractérisé en ce qu'**il comporte au moins une tranchée (5) collectrice, ménagée dans et/ou au bord de ladite surface, et dont le fond est imperméable et situé à une hauteur inférieure à celle de ladite surface.

7. Système selon une des revendications 1 à 6, **caractérisé en ce que** ladite tranchée (5) débouche sur au moins un dispositif de pompage (55) débouchant sur au moins un conduit (56) évacuant le fluide (L) à l'extérieur des agrégats (S) ou sur au moins un conduit (56) ramenant le fluide (L) au-dessus des agrégats (S) pour des passages successifs au travers dudit système (1) ou en amont des mini-drains perforés (23) pour des passages successifs dans ces derniers.

8. Système selon une des revendications 1 à 7, **caractérisé en ce que** ladite surface est munie d'au moins une membrane sensiblement imperméable (4).

9. Procédé de captage de composé chimique dans des agrégats (S), comportant une étape de création (60) d'au moins une surface sur laquelle est disposée au moins un géocomposite (2) comportant au moins une nappe drainante (22) sur laquelle sont disposés des mini-drains perforés (23) suivi d'une étape de dépôt (63) d'agrégats (S) sur ledit géocomposite (2) de façon à ce qu'un fluide (L), qui se charge en composé(s) chimique(s) en traversant lesdits agrégats (S), gagne l'intérieur desdits mini-drains perforés (23) **caractérisé en ce que** les mini-drains perforés (23) contiennent chacun au moins un fil (24) fixateur de composé chimique lesdits fils fixateurs (24) captant le(s) composé(s) chimique(s).

10. Procédé selon la revendication 9, **caractérisé en ce que** l'étape de dépôt (63) des agrégats (S) sur ledit géocomposite (2) est précédée d'une étape de dépôt (61) d'au moins une nappe filtrante (25) recouvrant les mini-drains perforés (23), de manière à filtrer ledit fluide (L).

11. Procédé selon une des revendications 9 ou 10, **caractérisé en ce que** l'étape de dépôt (63) des agrégats (S) sur ledit géocomposite (2) est précédée d'une étape de dépôt (62) d'au moins un granulat (3) de granulométrie déterminée en fonction de la vitesse cinétique de fixation des composés chimiques par lesdits fils fixateurs (24) et/ou de la granulométrie des agrégats (S).

12. Procédé selon une des revendications 9 à 11, **caractérisé en ce qu'**il comporte au moins une étape d'attachement (64) de chacun desdits fils fixateurs (24) à au moins un dispositif d'attache (26) des fils fixateurs (24) accessible, permettant la mise en oeuvre d'au moins une étape de remplacement (65) desdits fils fixateurs (24).

13. Procédé selon une des revendications 9 à 12, **caractérisé en ce que** l'étape de création (60) de ladite surface est accompagnée d'au moins une étape de création (600) d'au moins une tranchée (5) collectrice, dans et/ou au bord de ladite surface, et dont au moins le fond est imperméable et situé à une hauteur inférieure à celle de ladite surface.

14. Procédé selon une des revendications 9 à 13, **caractérisé en ce que** l'étape de création de ladite tranchée (5) comporte une étape de placement (601) d'au moins un dispositif de pompage (55) de la tranchée (5) qui débouche sur au moins un conduit (56), pour permettre la mise en oeuvre, soit d'une évacuation (66) dudit fluide (L) à l'extérieur des agrégats (S), soit d'une ré-aspersion (67) dudit fluide (L) au-dessus des agrégats (S), soit d'une recirculation (68) dudit fluide (L) dans les mini-drains perforés (23).

15. Procédé selon une des revendications 9 à 14, **caractérisé en ce qu'**il est mis en oeuvre dans un système selon l'une des revendications 1 à 8.

## Patentansprüche

1. System (1) zum Auffangen einer chemischen Verbindung in Aggregaten (S), das wenigstens eine Fläche aufweist, auf der wenigstens ein Geoverbundstoff (2) angeordnet ist, der wenigstens eine Drainagebahn (22) umfasst, die mit Drainage-Miniperforationen (23) versehen ist, wobei Aggregate (6) auf dem genannten Geoverbundstoff (2) platziert werden, so dass ein Fluid (L), das sich beim Fließen durch das Aggregat (S) mit chemischer Verbindung auflädt, ins Innere dieser Drainage-Miniperforationen (23) gelangt, **dadurch gekennzeichnet, dass** die Drainage-Miniperforationen (23) jeweils wenigstens einen Fixierfaden (24) aus der chemischen Zusammensetzung enthalten, wobei diese Fixierfäden (24) die chemische(n) Verbindung(en) auffangen.

2. System nach Anspruch 1, **dadurch gekennzeichnet, dass** dieser Geoverbundstoff (2) wenigstens eine Filtrierbahn (25) umfasst, die die Drainage-Miniperforationen (23) bedeckt, um das genannte Fluid (L) zu filtrieren.

3. System nach Anspruch 1 oder 2, **dadurch gekennzeichnet, dass** dieser Geoverbundstoff (2) vor dem Absetzen der Aggregate (S) mit wenigstens einem Granulat (3) mit einer Korngröße bedeckt wird, die in Abhängigkeit von der kinetischen Geschwindigkeit der Fixierung der chemischen Verbindungen durch diese Fixierfäden (24) und/oder die Korngröße des Aggregats (S) bestimmt wird.

4. System nach einem der Ansprüche 2 und 3, **dadurch gekennzeichnet, dass** die Filtrationsöffnung dieser Filtrierbahn (25) so ausgestattet ist, dass das Fließen dieses Fluids (L) in dem Geoverbundstoff (2) in Abhängigkeit von der kinetischen Geschwindigkeit der Fixierung der chemischen Verbindungen durch diese Fixierfäden (24) und/oder durch die Korngröße des Granulats (3) und/oder des Aggregats (S) reguliert wird.

5. System nach einem der Ansprüche 1 bis 4, **dadurch gekennzeichnet, dass** jeder dieser Fixierfäden (24) aus dieser Fläche hinaus bis zu wenigstens einer Vorrichtung (26) zum Befestigen der Fixierfäden (24) verläuft, die zugängig ist, damit diese Fixierfäden (24) ersetzt werden können.

6. System nach einem der Ansprüche 1 bis 5, **dadurch gekennzeichnet, dass** es wenigstens einen Sammelgraben (5) umfasst, der in und/oder am Rand dieser Fläche vorgesehen ist und dessen Boden undurchlässig ist und sich in einer Höhe unterhalb dieser Fläche befindet.

7. System nach einem der Ansprüche 1 bis 6, **dadurch gekennzeichnet, dass** dieser Graben (5) in wenigstens eine Pumpvorrichtung (55) mündet, die in wenigstens eine Leitung (56) mündet, die das Fluid (L) aus dem Aggregat (S) hinaus führt, oder in wenigstens eine Leitung (56), die das Fluid (L) oberhalb der Aggregate (S) für nachfolgende Passagen durch dieses System (1) führt, oder oberhalb der Drainage-Miniperforationen (23) für aufeinander folgende Passagen in diese Letzteren.

8. System nach einem der Ansprüche 1 bis 7, **dadurch gekennzeichnet, dass** diese Fläche mit wenigstens einer im Wesentlichen undurchlässigen Membran (4) versehen ist.

9. Verfahren zum Auffangen einer chemischen Verbindung in Aggregaten (S), das Folgendes beinhaltet: einen Schritt des Erzeugens (60) wenigstens einer Fläche, auf der wenigstens ein Geoverbundstoff (2) angeordnet ist, der wenigstens eine Drainagebahn (22) umfasst, die mit Drainage-Miniperforationen (23) versehen ist, gefolgt von einem Schritt des Absetzens (63) von Aggregaten (S) auf diesen Geoverbundstoff (2), so dass ein Fluid (L), das sich bei seinem Fluss durch diese Aggregate (S) mit chemischer Verbindung auflädt, ins Innere der genannten Drainage-Miniperforationen (23) gelangt, **dadurch gekennzeichnet, dass** die Drainage-Miniperforationen (23) jeweils einen Fixierfaden (24) aus chemischer Verbindung enthalten, wobei diese Fixierfäden (24) die chemische(n) Verbindung(en) auffangen.

10. Verfahren nach Anspruch 9, **dadurch gekennzeichnet, dass** dem Schritt des Absetzens (63) von Aggregaten (S) auf diesen Geoverbundstoff (2) ein Schritt des Absetzens (61) von wenigstens einer Filtrierbahn (25) vorangeht, die die Drainage-Miniperforationen (23) bedeckt, um dieses Fluid (L) zu filtrieren.

11. Verfahren nach Anspruch 9 oder 10, **dadurch gekennzeichnet, dass** dem Schritt des Absetzens (63) von Aggregaten (S) auf diesen Geoverbundstoff (2) ein Schritt des Absetzens (62) von wenigstens einem Granulat (3) mit einer Korngröße vorangeht, die in Abhängigkeit von der kinetischen Geschwindigkeit des Fixierens der chemischen Verbindungen durch diese Fixierfäden (24) und/oder die Korngröße der Aggregate (S) bestimmt wird.

12. Verfahren nach einem der Ansprüche 9 bis 11, **dadurch gekennzeichnet, dass** es wenigstens einen Schritt (64) des Befestigens jedes dieser Fixierfäden (24) an wenigstens einer zugängigen Vorrichtung (26) zum Befestigen der Fixierfäden (24) beinhaltet, so dass wenigstens ein Schritt (65) des Ersetzens dieser Fixierfäden (24) ausgeführt werden kann.

13. Verfahren nach einem der Ansprüche 9 bis 12, **dadurch gekennzeichnet, dass** der Schritt (60) des Erzeugens dieser Fläche von wenigstens einem Schritt (600) des Erzeugens von wenigstens einem Sammelgraben (5) in und/oder am Rand dieser Fläche begleitet wird, von dem wenigstens der Boden undurchlässig ist und der sich in einer Höhe unterhalb dieser Fläche befindet.

14. Verfahren nach einem der Ansprüche 9 bis 13, **dadurch gekennzeichnet, dass** der Schritt des Erzeugens dieses Grabens (5) einen Schritt des Platzierens (601) wenigstens einer Pumpvorrichtung (55) des Grabens (5) beinhaltet, der in wenigstens eine Leitung (56) mündet, um entweder ein Abführen (66) dieses Fluids (L) aus dem Aggregat (S) hinaus oder ein erneutes Spritzen (67) dieses Fluids (L) auf die Aggregate (S) oder eine Rezirkulation (68) dieses Fluids (L) in die Drainage-Miniperforationen (23) zu ermöglichen.

15. Verfahren nach einem der Ansprüche 9 bis 14, **dadurch gekennzeichnet, dass** es in einem System nach einem der Ansprüche 1 bis 8 ausgeführt wird.

## Claims

1. System (1) for collecting chemical compound in aggregates (S), comprising at least one surface on which is disposed at least one géocomposite (2) comprising at least one draining sheet (22) on which are disposed perforated mini-drains (23), aggregates (S) being disposed on said geocomposite (2) such that a fluid (L), which becomes laden with chemical compound as it passes through the aggregates (S), reaches the interior of said perforated mini-drains (23),
**characterised in that** the perforated mini-drains (23) each contain at least one chemical compound fixing wire (24), said fixing wires (24) collecting the chemical compound(s).

2. System according to claim 1, **characterised in that** said geocomposite (2) comprises at least one filtering sheet (25) covering the perforated mini-drains (23), in such a way as to filter said fluid (L).

3. System according to one of claims 1 or 2, **characterised in that** said geocomposite (2) is covered, prior to the deposition of the aggregates (S), with at least one granular material (3) with a granule size determined as a function of the kinetic speed of fixing of the chemical compounds by said fixing wires (24) and/or the granule size of the aggregates (S).

4. System according to one of claims 2 and 3, **characterised in that** the filtering opening of said filtering sheet (25) is arranged to control the flow of said fluid (L) in the geocomposite (2) as a function of the kinetic speed of fixing of the chemical compounds by the said fixing wires (24) and/or the granule size of the granular material (3) and/or the aggregates (S).

5. System according to one of claims 1 to 4, **characterised in that** each of said fixing wires (24) extends outside said surface as far as at least one device (26) for attachment of the fixing wires (24), which is accessible so as to permit the replacement of said fixing wires (24).

6. System according to one of claims 1 to 5, **characterised in that** it comprises at least one collecting trench (5), formed in and/or at the edge of said surface, and the bottom of which is impermeable and situated at a height below that of said surface.

7. System according to one of claims 1 to 6, **characterised in that** said trench (5) debouches into at least one pumping device (55) debouching into at least one conduit (56) discharging the fluid (L) to the exterior of the aggregates (S) or into at least one conduit (56) returning the fluid (L) above the aggregates (S) for successive passage through said system (1) or upstream of the perforated mini-drains (23) for successive passage through these.

8. System according to one of claims 1 to 7, **characterised in that** said surface is provided with at least one substantially impermeable membrane (4).

9. Method for collecting chemical compound in aggregates (S), comprising a step (60) for creating at least one surface on which is disposed at least one geocomposite (2) comprising at least one draining sheet (22) on which are disposed perforated mini-drains (23), followed by a step (63) for deposition of aggregates (S) on said geocomposite (2) such that a fluid (L), which becomes laden with chemical compound(s) as it passes through said aggregates (S), reaches the interior of said perforated mini-drains (23),
**characterised in that** the perforated mini-drains (23) each contain at least one chemical compound fixing wire, said fixing wires (24) collecting the chemical compound(s).

10. Method according to claim 9, **characterised in that** the step (63) for deposition of the aggregates (S) on the said géocomposite (2) is preceded by a step (61) for deposition of at least one filtering sheet (25) covering the perforated mini-drains (23), in such a way as to filter said fluid (L).

11. Method according to one of claims 9 or 10, **characterised in that** the step (63) for deposition of the aggregates (S) on said geocomposite (2) is preceded by a step (62) for deposition of at least one granular material (3) with a granule size determined as a function of the kinetic speed of fixing of the chemical compounds by said fixing wires (24) and/or the granule size of the aggregates (S).

12. Method according to one of claims 9 to 11, **characterised in that** it comprises at least one step (64) for attachment of each of said fixing wires (24) to at least one device (26) for attachment of the fixing wires (24) which is accessible, permitting the implementation of at least one step (65) for replacement of said fixing wires (24).

13. Method according to one of claims 9 to 12, **characterised in that** the step (60) for creation of said surface is accompanied by at least one step (600) for creation of at least one collecting trench (5), in and/or at the edge of said surface, and at least the bottom of which is impermeable and situated at a height below that of said surface.

14. Method according to one of claims 9 to 13, **characterised in that** the step for creation of said trench (5) includes a step (601) for placement of at least one pumping device (55) for the trench (5) which debouches into at least one conduit (56), to permit the implementation of either discharge (66) of said fluid (L) to the exterior of the aggregates (S), or a resprinkling (67) of said fluid (L) over the aggregates (S), or a recirculation (68) of said fluid (L) in the perforated mini-drains (23).

15. Method according to one of claims 9 to 14, **characterised in that** it is implemented in a system according to one of claims 1 to 8.
